# EUROPÄISCHE PATENTANMELDUNG

(11) **EP 2 485 064 A1**
(43) Veröffentlichungstag der Anmeldung: **08.08.2012**
(21) Anmeldenummer: 12000705.9
(22) Anmeldetag: 02.02.2012
(51) Int. Cl.: G01S 7/497, G01S 7/484

(54) **Lasersysteme und Steuerung eines Lasersystems**

(30) Priorität: 04.02.2011 DE 102011010411
(71) Anmelder: Deutsches Zentrum Für Luft- Und Raumfahrt E.V. (DLR), 51147 Köln (DE)
(72) Erfinder: Fix, Andreas, Dr., 82205 Gilching (DE); Giez, Andreas, Dr., 86889 Landsberg am Lech (DE)
(74) Vertreter: Rasch, Michael

(57) **Zusammenfassung**

Die Erfindung betrifft eine Vorrichtung (100) zur Steuerung eines Lasersystems (102), mit dem zumindest ein Laserstrahl (103) in einer Laserstrahlrichtung in eine Umgebung, insbesondere in die Erdatmosphäre und/oder den Weltraum, aussendbar ist, aufweisend ein Mittel, mit dem ein Eindringen und/oder ein Vorhandensein eines Flugobjekts (109) in einem vorgebbaren, sich in die Umgebung entlang der Laserstrahlrichtung erstreckenden Sicherheitsraumbereich (108) ermittelbar ist, und aufweisend ein Steuermittel, mit dem das Lasersystem (102) abhängig von einem erkannten Eindringen eines Flugobjektes (109) in den Sicherheitsraumbereich (108) und/oder einem Vorhandensein eines Flugobjektes (109) im Sicherheitsraumbereich (108) steuerbar ist. Weiterhin betrifft die Erfindung ein Lasersystem (102) mit einer ebensolchen Vorrichtung (100) und ein Verfahren zur Steuerung eines Lasersystems (102).

## Beschreibung

Die Erfindung betrifft eine Vorrichtung und ein Verfahren zur Steuerung eines Lasersystems, mit dem zumindest ein Laserstrahl in einer Laserstrahlrichtung in eine Umgebung aussendbar ist. Die Erfindung betrifft weiterhin ein Lasersystem mit einer ebensolchen Vorrichtung.

Im Rahmen von zivilen oder militärischen Nutzungen werden Lasersysteme zunehmend derart eingesetzt, dass sie Laserstrahlen in die freie (Erd-)Atmosphäre und/oder den Weltraum aussenden, wobei grundsätzlich die Gefahr besteht, dass Menschen, Tiere oder empfindliche andere Objekte, wie beispielsweise Messsensoren, Satelliten etc., geschädigt werden können, sofern sie von dem ausgesandten Laserstrahl getroffen werden und die auf sie treffende Laserstrahlenergie entsprechend hoch ist. Dies gilt insbesondere für den Fall, dass der Laserstrahl direkt in die Augen eines Menschen oder auf empfindliche künstliche Sensoren gelangt.

Im zivilen Bereich werden derartige Lasersysteme beispielsweise für Aufgaben der Umweltforschung, der Umweltüberwachung, der Umgebungsabtastung, oder zur Informationsübertragung eingesetzt. Diese Lasersysteme können auf der Erdoberfläche und an Bord von Fahrzeugen oder Fluggeräten [(Forschungs-)Flugzeugen, Hubschraubern, Satelliten etc.] positioniert sein. Flugzeuggetragene oder satellitengetragene Laseranwendungen, bei denen ein Laserstrahl in die freie Atmosphäre ausgesandt wird, dienen beispielsweise der Erfassung atmosphärischer Eigenschaften, wie der Partikelkonzentration und -verteilung, der chemischen Zusammensetzung der Atmosphäre, der Feuchtekonzentration und -verteilung, oder der Erfassung von Luftströmungen. Weitere Anwendungsgebiete derartiger Lasersysteme sind Altimetrieanwendungen, die optische Telekommunikation zwischen Fluggeräten/Satelliten oder zwischen Fluggeräten/Satelliten und Bodenstationen, Anwendungen zur Objekterkennung, oder Anwendungen zur gezielten Erwärmung von Oberflächen (bspw. zum "Anti-Icing" oder "De-Icing" von Flugzeugflächen bzw. Tragflügelnasen im Fluge) und dergleichen mehr.

Beispielhafte Laseranwendungen können auch den folgenden Dokumenten entnommen werden: DE102004007405A1, DE10316762B4, DE19932354B4 oder DE10319560A1. Die Energie der Laserstrahlung kann bei den vorstehenden, nur beispielhaft genannten Anwendungen, so hoch sein, dass es bis zu einer bestimmten Entfernung vom den Laserstrahl aussendenden Lasersystem bei Menschen zu gesundheitlichen Gefährdungen bspw. durch Haut- oder Augenschäden kommen kann, sofern diese vom Laserstrahl getroffen werden. Insbesondere können durch die Laserstrahlen derartiger Lasersysteme Personen an Bord eines Fluggerätes oder einer Raumstation (bspw. ISS engl. für "International Space Station") gefährdet sein, sofern die Laserstrahlung durch ein Fenster hindurchtritt und auf die Besatzung oder Passagiere des Fluggerätes trifft.

Aufgrund dieser potentiellen Gefährdung werden beispielsweise Flüge mit Forschungsflugzeugen, die ein derartiges Lasersystem an Bord haben, seitens der zuständigen Behörden nur in bestimmten Lufträumen oder in vorgegebenen Flughöhen genehmigt, was flugzeuggetragene Laseranwendungen, bspw. im dicht beflogenen Luftraum über Europa, derzeit erheblich einschränkt. Weiterhin können durch die Laserstrahlung eines auf einem Satelliten positionierten derartigen Lasersystems beispielsweise Messsensoren auf anderen Satelliten, die Besatzung einer Raumstation (bspw. der ISS) oder ebenfalls die Besatzung/ Passagiere von Flugzeugen gefährdet werden. Auch können durch die vorgenannten Anti-Icing/De-Icing-Anwendungen von Lasersystemen bei einer Spiegelung oder Falschjustierung des Lasersystems Passagiere/Besatzungen anderer Flugzeuge, insbesondere im Nahbereich von Flugplätzen, wo die Flugzeugdichte am höchsten ist, gefährdet sein. Der Grenzwert der Laserenergie, ab dem eine Gefährdung eines Objektes (bspw. eines Menschen oder eines Sensors) anzunehmen ist, hängt natürlich von dem jeweiligen Objekt ab, das es zu schützen gilt. Entsprechende Grenzwerte sind im Stand der Technik hinreichend bekannt.

Vor dem geschilderten Hintergrund besteht derzeit insbesondere ein Bedarf, die Gefährdung von Menschen und/oder empfindlicher Objekte an Bord von Flugzeugen/Raumstationen/Satelliten oder am Boden durch Einwirkung von Laserstrahlung derartiger Lasersysteme zu verringern. Darüber hinaus besteht ein Bedarf, die Nutz- und Einsetzbarkeit derartiger Lasersysteme an Bodenstationen und an Bord von Forschungsflugzeugen/Forschungssatelliten zu verbessern.

Aus der WO97/21261 ist hierzu eine Vorrichtung zur Steuerung einer Strahlenquelle bekannt, mit der ein gefährlicher (= "hazardous") elektromagnetischer Strahl in einer Strahlrichtung in eine Umgebung aussendbar ist bekannt, wobei die Vorrichtung ein Mittel aufweist, mit dem ein Eindringen in einen und/oder ein Vorhandensein eines Objekts in einem vorgebbaren, sich in die Umgebung entlang der Strahlrichtung erstreckenden Sicherheitsraumbereich ermittelbar ist. Die Vorrichtung umfasst ein Steuermittel, mit dem die Strahlenquelle abhängig von einem erkannten Eindringen eines Flugobjektes in den Sicherheitsraumbereich und/oder einem Vorhandensein eines Flugobjektes im Sicherheitsraumbereich steuerbar ist. Das Mittel umfasst eine Vorrichtung zur Erzeugung eines ungefährlichen ("non-hazardous") elektromagnetischen Strahls, der im wesentlichen parallel (koaxial) zu der Strahlrichtung des gefährlichen Strahls ausgesandt wird, wobei die Aussendezeit mit der Aussendezeit des gefährlichen Strahls koinzidiert oder im wesentlichen zeitlich unmittelbar benachbart erfolgt, so dass ein sich bewegendes Objekt den Strahlengang des ungefährlichen Strahls passiert, bevor es auf den "gefährlichen" Strahl trifft. Weiterhin umfasst das vorgenannte Mittel eine Vorrichtung mit der ein in den Strahlengang des ungefährlichen Strahls eintretendes Objekt erkennbar ist.

Die Aufgabe der Erfindung ist es, eine von den eingangs genannten Lasersystemen ausgehende Gefährdung zu reduzieren.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist mit einer Vorrichtung zur Steuerung eines Lasersystems gelöst, mit dem zumindest ein Laserstrahl in einer Laserstrahlrichtung in eine Umgebung, insbesondere in die freie Erdatmosphäre und/oder den Weltraum, aussendbar ist, wobei die Vorrichtung ein Mittel umfasst, mit dem ein Eindringen eines Flugobjekts in einen vorgebbaren, sich in die Umgebung entlang der Laserstrahlrichtung erstreckenden Sicherheitsraumbereich und/oder ein Vorhandensein eines Flugobjektes in dem vorgebbaren, sich in die Umgebung entlang der Laserstrahlrichtung erstreckenden Sicherheitsraumbereich ermittelbar ist, die Vorrichtung weiterhin ein Steuermittel aufweist, mit dem das Lasersystem, abhängig von einem erkannten Eindringen eines Flugobjektes in den Sicherheitsraumbereich und/oder einem erkannten Vorhandensein eines Flugobjektes im Sicherheitsraumbereich steuerbar ist. Die Vorrichtung zeichnet sich dadurch aus, dass das das Mittel derart ausgeführt und eingerichtet ist, dass Signale von Sekundärradartranspondern und/oder von ADS-B-Sendern und/oder von FLARM-Sendern empfangbar sind und das Eindringen eines Flugobjektes in den und/oder das Vorhandensein eines Flugobjektes im Sicherheitsraumbereich auf Basis der empfangenen Signale ermittelt wird.

Die erfindungsgemäße Vorrichtung ermöglicht somit einerseits das Eindringen zumindest eines mit einem der vorgenannten Sender ausgestatteten Flugobjektes in den Sicherheitsraumereich und/oder ein Vorhandensein zumindest eines solchen Flugobjektes im Sicherheitsraumbereich zu erkennen, und andererseits, abhängig von einem erkannten Eindringen oder Vorhandensein zumindest eines Flugobjektes im Sicherheitsraumbereich das Lasersystem zu steuern. Die Steuerung des Lasersystems erfolgt dabei vorliegend derart, dass eine Gefährdung eines im Sicherheitsraumbereich vorhandenen Flugobjektes weitestgehend ausgeschlossen werden kann. Hierzu ergeben sich unterschiedliche Möglichkeiten der Steuerung.

In einer besonders bevorzugten Weiterbildung der erfindungsgemäßen Vorrichtung ist das Steuermittel derart ausgeführt und eingerichtet, dass ein Aussenden eines Laserstrahls durch das Lasersystem immer dann unterbunden wird, oder das Aussenden eines Laserstrahls mit einer vorgebbar reduzierten Laserleistung erfolgt, wenn vom Mittel ein Eindringen zumindest eines Flugobjekts in den Sicherheitsraumbereich und/oder ein Vorhandensein zumindest eines Flugobjektes im Sicherheitsraumbereich erkannt wird.

Damit kann sichergestellt werden, dass ein im Sicherheitsraumbereich vorhandenes Flugobjekt entweder von keinem Laserstahl getroffen werden kann, da keiner ausgesandt wird, oder ein Laserstrahl ausgesandt wird, dessen Energie soweit abgesenkt wurde, dass für ein Flugobjekt, bzw. dessen Insassen keinerlei Gefährdung mehr besteht. Die von einem derartigen Lasersystem grundsätzlich ausgehende Gefährdung, insbesondere für Menschen an Bord von Flugobjekten, wie Flugzeugen/Raumstationen/Satelliten oder empfindlichen anderen Objekten an Bord solcher Flugobjekte wird somit effektiv reduziert. Insbesondere ermöglicht die erfindungsgemäße Vorrichtung durch eine entsprechende Steuerung des Lasersystems eine verbesserte Einsetzbarkeit für zulassungspflichtige, insbesondere zivile Anwendungen derartiger Lasersysteme, bspw. von flugzeuggetragenen Lasersystemen für Forschungsaufgaben.

Der Begriff "Flugobjekt" wird vorliegend weit gefasst, er umfasst beispielweise Flugzeuge jeglicher Bauart, Ballons, Hubschrauber, Satelliten, Raumfahrzeuge, etc. Dabei sind autonom fliegende oder fern-gesteuerte unbemannte Flugobjekte ebenso umfasst, wie bemannte Flugobjekte. Unter dem Begriff "Flugobjekt" können natürlich auch fliegende Lebewesen, wie Vögel, Enten, Gänse, Adler, etc. verstanden werden.

Lasersysteme für die einleitend genannten Anwendungen sind allgemein bekannt, so dass vorliegend keine weiteren Ausführungen hierzu gemacht werden, sondern auf den einschlägigen Stand der Technik verwiesen wird.

Die erfindungsgemäße Vorrichtung sowie das Lasersystem sind bevorzugt an Bord eines Fluggerätes installiert, wobei der Laserstrahl in die Umgebung des Fluggerätes, insbesondere in die freie Erd-Atmosphäre, aussendbar ist. Die Laserstrahlrichtung kann bei fliegenden Fluggeräten grundsätzlich in jeden Raumwinkel erfolgen, bspw. nach unten, nach oben oder zur Seite. Der Begriff "Fluggerät" wird vorliegend ebenfalls breit verstanden. Er umfasst beispielsweise Flugzeuge jeglicher Bauart, Satelliten, oder Raumfahrzeuge und er unterscheidet sich von dem vorgenannten Begriff "Flugobjekt" in der vorliegenden Beschreibung dadurch, dass an Bord des Fluggerätes die Vorrichtung sowie das Lasersystem installiert sind und somit von Bord des Fluggerätes Laserstrahlen ausendbar sind, während es sich bei den Flugobjekten um insbesondere flugfähige bzw. fliegende Objekte handelt, die vor einem Laserstrahl aus den Lasersystem zu schützen sind. Die erfindungsgemäße Vorrichtung ermöglicht somit, das Lasersystem abhängig von im Sicherheitsraumbereich erkannten oder in diesen eindringenden Flugobjekten derart zu steuern, dass bspw. keine Gefährdung dieser Flugobjekte durch einen vom Lasersystem ausgesandeten Laserstrahl mehr möglich ist.

In einer alternativen Ausführungsform sind die erfindungsgemäße Vorrichtung sowie das von dieser gesteuerte Lasersystem an der Erdoberfläche mobil (bspw. auf einem Auto oder Schiff etc.) oder immobil/ortsfest (bspw. an einer Forschungsstation) positioniert, wobei der Laserstrahl in die Umgebung, insbesondere die freie Erdatmosphäre, aussendbar ist. Die Aussendung des Laserstrahls in die Erd-Atmosphäre kann bei Bodenstationen nur in den oberen Halbraum, d.h. den Raum oberhalb der Erdoberfläche erfolgen. Die erfindungsgemäße Vorrichtung ermöglicht in diesem Fall, das Lasersystem abhängig von im entlang einer Laserstrahlrichtung vorgegebenen Sicherheitsraumbereich erkannten Flugobjekten derart zu steuern, dass keine Gefährdung der Flugobjekte durch einen vom Lasersystem ausgesandeten Laserstrahl mehr möglich ist.

Der "Sicherheitsraumbereich" gibt einen Raumbereich an, der sich entlang der Laserstrahlrichtung erstreckt, in die ein Laserstrahl ausgehend vom Lasersystem ausgesandt werden soll, wobei der Raumbereich den auszusendenden Laserstrahl zumindest teilweise einschließt. Der Sicherheitsraumbereich kann konstant oder variabel sein, so kann er bspw. je nach vorliegender Aufgabenstellung, vorliegendem Lasersystem (Leistungsklasse, etc.), und/oder der Laserrichtung, in die ein Laserstrahl ausgesandt werden soll, und/oder der aktuell eingestellten Laserleistung/Laserenergie dem erfindungsgemäßen Mittel vorgegeben oder von dem Mittel aktuell ermittelt werden. Der Sicherheitsraumbereich kann dabei grundsätzlich nahezu jede räumliche Form aufweisen.

Der Sicherheitsraumbereich ist bevorzugt derart dimensioniert, dass außerhalb des Sicherheitsraumbereichs keine Gefährdung von Menschen und/oder von vorgegebenen sensiblen Objekten möglich ist, bspw. weil die Laserenergie/Laserleistung außerhalb des Sicherheitsraumbereichs unter einen entsprechend vorgegebenen Schwellwert abgesunken ist oder ein in den Sicherheitsraumbereich gerade eindringendes und als solches erkanntes Flugobjekt der erfindungsgemäßen Vorrichtung ausreichend Zeit lässt, um das Lasersystem entsprechend zu steuern, damit die Gefährdung des Flugobjektes ausgeschlossen werden kann. In welchem Abstand vom Lasersystem der vorgenannte Laserenergie-Schwellwert erreicht bzw. unterschritten wird, kann bspw. von den atmosphärischen Bedingungen, die zudem zeitlich und örtlich variieren können und/oder von der Laserstrahlrichtung abhängen. Der Sicherheitsraumbereich wird bevorzugt abhängig von den Laserenergie-Schwellwerten und der Laserstrahlrichtung definiert.

In einer bevorzugten Weiterbildung der erfindungsgemäßen Vorrichtung wird die aktuelle Position des Lasersystems und/oder der Zustand der umgebenden (Erd-) Atmosphäre und/oder die Laserstrahlrichtung, in die ein Laserstrahl ausgesandt werden soll, bei der Bestimmung des Sicherheitsraumbereiches von dem Mittel berücksichtigt. In den zuletzt genannten Fällen wird der Sicherheitsraumbereich vom Mittel jeweils aktuell, bevorzugt automatisiert, ermittelt.

Weiterhin ist der Sicherheitsraumbereich bevorzugt derart dimensioniert, dass in ihn eindringende Flugobjekte von dem Mittel so rechtzeitig erkannt werden, dass eine Steuerung des Lasersystem mit entsprechendem zeitlichen Vorlauf möglich ist, und bereits in ihn eingedrungene Flugobjekte bis zum ihrem Verlassen des Sicherheitsraumbereichs durch das Mittel erfassbar bleiben. Der Sicherheitsraumbereich kann durch feste Raumkoordinaten, bspw. bei Anwendungen für ein am Erdboden fest positioniertes Lasersystem, oder durch Relativkoordinaten definiert sein, die sich auf die aktuelle Position eines mobilen bzw. eines fliegenden Lasersystems mit erfindungsgemäßer Vorrichtung beziehen.

Die einfachste Form des Sicherheitsraumbereichs ist die Kugelform. Das Lasersystem, das den Laserstrahl aussendet, ist in diesem Fall im Kugelmittelpunkt positioniert. Der Radius des kugelförmigen Sicherheitsraumbereichs um das Lasersystem wird bevorzugt derart bemessen, dass die Laserstrahlenergie außerhalb des Sicherheitsbereichs auf einen Wert abgesunken ist, die zu keinerlei Schädigungen bei Menschen oder vorgegebenen sensiblen Objekten Anlass geben kann. In diesem Fall ist der Sicherheitsraumbereich unabhängig von der Laserstrahlrichtung. Allerdings werden dabei auch Raumbereiche berücksichtigt, in die niemals ein Laserstrahl ausgesandt wird, so dass ggf. die Einsatzfähigkeit des Lasersystems zu stark eingeschränkt wird.

In bevorzugter Weise wird der Sicherheitsraumbereich jeweils in Abhängigkeit von der Laserstrahlrichtung festgelegt, in die ein Laserstrahl ausgesandt werden soll. Damit kann der Sicherheitsraumbereich in Hinblick auf die aktuell beabsichtigte Laserstrahlrichtung hin optimiert werden, d h. es wird nur der Raumbereich berücksichtigt, in dem eine Gefährdung von Flugobjekten durch den Laserstrahl überhaupt möglich ist. Bevorzugte 3D-Formen des Sicherheitsraumbereichs sind dabei:
- ein 3D-Kegel, wobei das Lasersystem an der Kegelspitze des 3D-Kegels angeordnet ist, sich der Schutzraumbereich davon ausgehend kegelförmig mit einem Kegelwinkel KW bis zu einer Kegelhöhe KH ausbreitet, und die Kegellängsachse und die Laserstrahlrichtung koaxial zueinander angeordnet sind;
- ein 3D-Zylinder, wobei das Lasersystem in der Zylinderachse positioniert ist, die Laserstrahlrichtung und die Zylinderachse koaxial zueinander angeordnet sind, und der Zylinder eine Zylinderhöhe ZH und einen Zylinderradius ZR aufweist, oder
- eine Halbkugel, wobei das Lasersystem im Mittelpunkt der Halbkugel angeordnet ist.

Bevorzugt umfasst die erfindungsgemäße Vorrichtung ein Eingabemittel, bspw. eine Tastatur, einen Touchscreen, etc. mittels dem Form, Dimension und/oder räumliche (Relativ-) Koordinaten des Sicherheitsraumbereichs vorgebbar oder manipulierbar sind. Dem Bediener ist es somit einfach möglich, dem Mittel alle erforderlichen Vorgaben über den Sicherheitsraumbereich und ggf. seine Veränderung in Abhängigkeit der Laserstrahlrichtung bereitzustellen. Alternativ oder zusätzlich umfasst die Vorrichtung eine Speichereinheit, auf der Koordinaten des Sicherheitsraumbereichs, vorzugsweise abhängig von der Laserstrahlrichtung, gespeichert sind.

Eine besonders bevorzugte Weiterbildung der erfindungsgemäßen Vorrichtung zeichnet sich dadurch aus, dass die Laserstrahlrichtung des Lasersystems variabel ist und das Mittel derart ausgeführt und eingerichtet ist, dass der Sicherheitsraumbereich abhängig von der Laserstrahlrichtung automatisiert festlegbar bzw. vorgebbar ist. So kann beispielsweise ein an Bord eines Fluggerätes fest montiertes Lasersystem mittels einer variablen Optik den Laserstrahl in verschiedene Laserrichtungen in die freie Atmosphäre lenken, wobei der Sicherheitsraumbereich der aktuellen Laserstrahlrichtung jeweils angepasst wird. Hierzu verfügt das Mittel beispielsweise über einen Rechner sowie entsprechende Programmmittel, mit denen der aktuelle Sicherheitsraumbereich abhängig von der Laserstrahlrichtung ermittelbar ist.

Wie vorstehend ausgeführt, ist das Mittel der erfindungsgemäßen Vorrichtung derart eingerichtet und ausgeführt, dass Signale von Sekundärradartranspondern (darunter werden SSR-Transponder wie bspw. Mode A-, B-, C- oder S- Transponder verstanden), und/oder von ADS-B-Sendern (engl. "Automatic Dependent Surveillance-Broadcast") und/oder von FLARM-Sendern (engl. "Flight Alarm") empfangbar sind und das Eindringen eines Flugobjektes in den und/oder das Vorhandensein eines Flugobjektes im Sicherheitsraumbereich auf Basis der empfangenen Signale ermittelt wird.

Die Nutzung der genannten Systeme setzt voraus, dass ein sich dem Sicherheitsraumbereich näherndes Flugobjekt oder ein in den Sicherheitsraumbereich eindringendes Flugobjekt mit einem entsprechenden Sender ausgestattet ist und dieser auch aktiv ist, um vom Mittel bzw. von dessen Einrichtung/en erkannt zu werden. Die vorgenannten Sekundärradar-Systeme, ADS-B-Systeme und FLARM-Systeme und deren Funktionsweise sind hinreichend bekannt, so dass auf den einschlägigen Stand der Technik verwiesen wird.

Das Mittel ermöglicht bevorzugt die Erfassung und die Verfolgung einer Vielzahl von Flugobjekten vom Eindringen in den Sicherheitsraumbereich bis zu dessen Verlassen.

Mit dem Mittel wird bevorzugt die aktuelle relative Position der erkannten Flugobjekten zur Position des Lasersystems ermittelt, bzw. aus der Änderung der absoluten Position eines erfassten/ermittelten Flugobjektes ein dem Flugobjekt zugeordneter Geschwindigkeitsvektor bestimmt. Auf Basis dieser Informationen kann das Mittel ein bevorstehendes Einfliegen und/oder ein aktuelles Einfliegen eines Flugobjektes in den Sicherheitsraumbereich und/oder ein Vorhandensein eines Flugobjektes im Sicherheitsraumbereich und/oder ein Verlassen des Sicherheitsraumbereichs durch ein Flugobjekt ermitteln.

Eine bevorzugte Weiterbildung der erfindungsgemäßen Vorrichtung zeichnet sich dadurch aus, dass ein Aussenden eines Laserstrahls durch das Lasersystem zusätzlich immer dann unterbunden wird, oder das Aussenden eines Laserstrahls mit einer vorgebbar reduzierten Laserleistung erfolgt, wenn ein Fluggerät mit einem an Bord installierten Lasersystem und einer an Bord installierten erfindungsgemäßen Vorrichtung einen vorgegebenen Bereich auf der Erdoberfläche überfliegt, und/oder das Fluggerät in einen vorgegebenen Luftraum einfliegt und/oder sich darin aufhält. Diese Weiterbildung ermöglicht zusätzlich ein automatisches Abschalten des Lasersystems bzw. ein Verhindern des Aussendens eines Laserstrahls, wenn das Fluggerät mit dem Lasersystem und der erfindungsgemäßen Vorrichtung an Bord bspw. über am Erdboden installierte Teleskope oder über Einrichtungen mit empfindlichen, himmelswärts blickenden optischen Instrumenten fliegt. Je nach Vorgabe bzw. Aufgabenstellung kann das Lasersystem durch entsprechende Auswahl von Bereichen auf der Erdoberfläche oder Auswahl von Lufträumen und Vorgabe von entsprechenden Steuerbefehlen an das Lasersystem derart gesteuert werden, dass eine Gefährdung von Personen in Flugobjekten und auf der Erdoberfläche wirksam reduziert wird.

In einer bevorzugten Weiterbildung der erfindungsgemäßen Vorrichtung umfasst das Mittel eine Einheit zur Erfassung der aktuellen Position des Fluggeräts sowie eine Datenbank, in der vorgebbare Bereiche auf der Erdoberfläche und/oder Lufträume definiert sind, über/in denen das Aussenden eines Laserstrahls durch das Lasersystem Restriktionen unterliegt, wobei das Steuermittel derart ausgeführt und eingerichtet ist, dass das Lasersystem abhängig von der aktuellen Position des Fluggerätes, den vorgegebenen Bereichen der Erdoberfläche und/oder den vorgegebenen Lufträumen und den vorgegebenen Restriktionen, vorzugsweise automatisiert derart steuerbar ist, das die Restriktionen beim Betrieb des Lasersystems eingehalten werden.

Ein zweiter Aspekt der vorliegenden Erfindung betrifft ein Lasersystem mit einer vorstehend beschriebenen Vorrichtung zur Steuerung des Lasersystems. Vorteilhafte Ausgestaltungen des Lasersystems ergeben sich aus den vorstehenden Ausführungen auf die hierzu explizit verwiesen wird.

Ein dritter Aspekt der Erfindung betrifft ein Verfahren zur Steuerung eines Lasersystems, mit dem zumindest ein Laserstrahl in einer Laserstrahlrichtung in eine Umgebung, insbesondere in die freie Atmosphäre, aussendbar ist. Das erfindungsgemäße Verfahren umfasst folgende Verfahrensschritte: Ermitteln, ob ein Flugobjekt in einen vorgegebenen, sich in die Umgebung entlang der Laserstrahlrichtung erstreckenden Sicherheitsraumbereich eindringt und/oder sich darin aufhält, und Steuern des Lasersystems derart, dass bei einem ermittelten Eindringen zumindest eines Flugobjekts in den Sicherheitsraumbereich und/oder einem ermittelten Aufenthalt zumindest eines Flugobjekts im Sicherheitsraumbereich, das Lasersystem keinen Laserstrahl aussendet, oder einen Laserstrahl mit verminderter Leistung aussendet, oder die Laserstrahlrichtung geändert wird, wobei das Ermitteln des Eindringens und/oder des Vorhandenseins eines Flugobjektes im Sicherheitsraumbereich auf Basis von empfangenen Signalen von Sekundärradartranspondern, von ADS-B-Sendern oder von FLARM-Sendern erfolgt.

Vorteilhafte Ausgestaltungen des Verfahrens ergeben sich durch Merkmale, wie sie vorstehend bereits im Zusammenhang mit der erfindungsgemäßen Vorrichtung dargestellt und erläutert wurden. Auf diese Ausführungen sei an dieser Stelle explizit verwiesen.

Weitere Vorteile, Merkmale und Einzelheiten ergeben sich aus der nachfolgenden Beschreibung, in der unter Bezug auf die Zeichnungen Ausführungsbeispiele im Einzelnen beschrieben sind. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer oder mehrerer separaten Anmeldung/en sein. Gleiche, ähnliche und/oder funktionsgleiche Teile sind mit gleichen Bezugszeichen versehen.

Es zeigen:
- Fig. 1: eine schematische Darstellung von Längsschnitten durch verschiedene Formen von Sicherheitsraumbereichen 105, 106, 107 am Beispiel eines flugzeuggetragenen Lasersystems 102, mit vom Flugzeug 101 in Richtung Erdoberfläche aussendbaren Laserstrahlen 103.
- Fig. 2: eine schematische Darstellung zur Erläuterung der Funktionsweise der erfindungsgemäßen Vorrichtung, und
- Fig. 3: Ablaufschema eines erfindungsgemäßen Verfahrens.

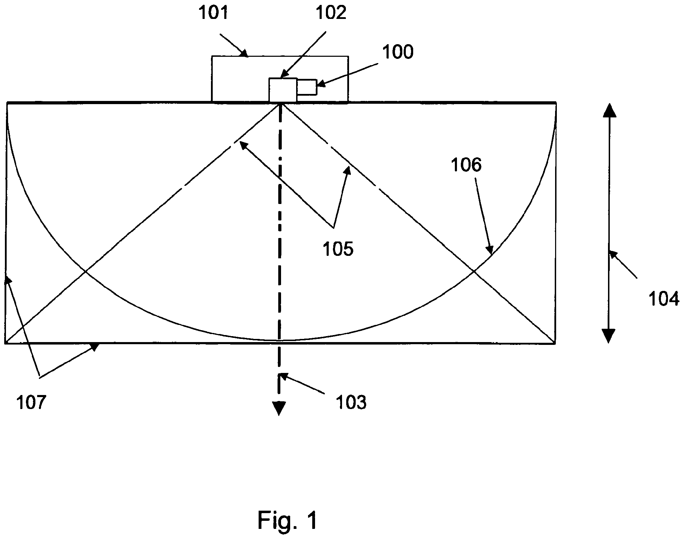

**Fig. 1** zeigt eine schematische Darstellung von Längsschnitten durch verschiedene Formen von Sicherheitsraumbereichen 105,106, 107 am Beispiel eines flugzeuggetragenen Lasersystems 102, mit vom Flugzeug 101 in Richtung Erdoberfläche aussendbaren Laserstrahlen 103. Ausgehend vom Lasersystem 102 an Bord des Flugzeugs 101 kann nach unten ein Laserstrahl 103 ausgesandt werden. Der Sicherheitsraumbereich, der sich in die Umgebung entlang der Laserstrahlrichtung des Laserstrahls 103 erstreckt, kann die verschiedensten Formen und Abmessungen aufweisen. Dargestellt sind vorliegend ein halbkugelförmiger Sicherheitsraumbereich 106, ein konusförmiger Sicherheitsraumbereich 105 und quaderförmiger Sicherheitsraumbereich 107. In allen Fällen ist der Sicherheitsraumbereich derart gewählt, dass ausgeschlossen ist, dass ein in den Sicherheitsraumbereich 108 eindringendes Flugobjekt 109 von dem Laserstrahl 103 getroffen werden kann. In Längsrichtung des Laserstrahls 103 erstreckt sich der Sicherheitsraumbereich 105, 106 107 zumindest bis zu einer Entfernung 104 vom Lasersystem 102, ab der eine Schädigung bspw. eines menschlichen Auges ausgeschlossen werden kann. Diese Entfernung wird auch als Sicherheitsabstand (NOHD, nominal ocular hazard distance) bezeichnet.

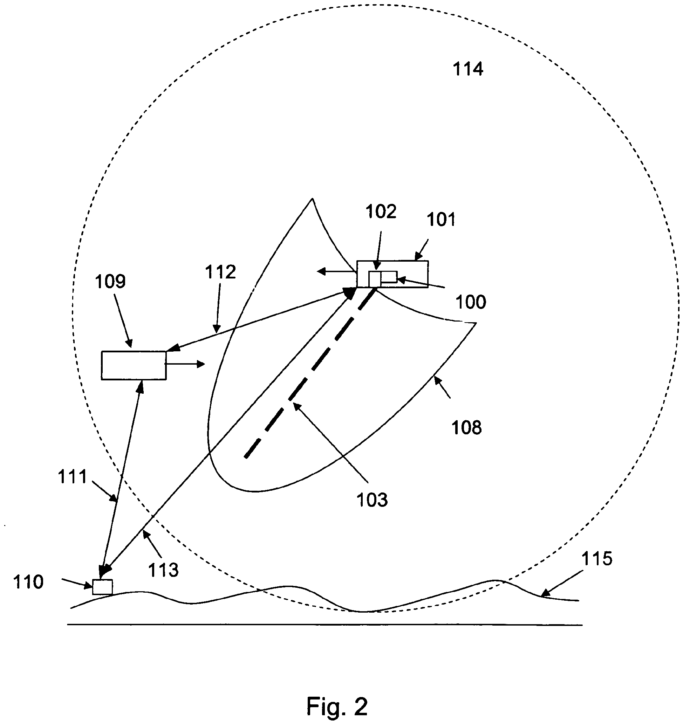

**Fig. 2** zeigt eine schematische Darstellung zur Erläuterung der Funktionsweise der erfindungsgemäßen Vorrichtung 100. Das dargestellte Ausführungsbeispiel basiert auf einer Anwendung der erfindungsgemäßen Vorrichtung 100 zur Steuerung eines an Bord eines Forschungsflugzeugs 101 installierten Lasersystems 102, mit dem Laserstrahlen 103 in die freie Erd-Atmosphäre zur Ermittlung von atmosphärischen Spurenstoffen aussendbar sind.

Wenn gegenwärtig Laserstrahlung aus einem Forschungsflugzeug ausgesandt wird, deren Energie oder Leistung oberhalb einer maximal zulässigen Energie oder Leistung liegt, so muss in der Regel eine Flugstrategie gewählt werden, die die Gefährdung anderer Luftfahrzeuge bzw. von deren Besatzung und Passagieren durch den Laserstrahl ausschließt. Dies bedeutet in der Regel die Vermeidung von Gebieten mit hohem Luftverkehr oder den Betrieb des Forschungsflugzeugs nur in besonderen Lufträumen oder Flugflächen. Dies schränkt jedoch den Einsatzbereich einer solchen Laseranwendung an Bord des Forschungsflugzeuges, insbesondere über dem dicht beflogenen Luftraum über Europa erheblich ein.

Zur Reduzierung der Gefährdung von anderen Luftfahrzeugen durch einen vom Forschungsflugzeug ausgesandten Laserstrahl ist im vorliegenden Ausführungsbeispiel im Forschungsflugzeug 101 eine erfindungsgemäße Vorrichtung 100 zur Steuerung des Lasersystems 102 vorhanden. Diese Vorrichtung 100 umfasst ein Mittel, mit dem ein Eindringen und/oder ein Vorhandensein eines Flugobjekts 109 in einem vorgebbaren, sich in die Umgebung entlang der Laserstrahlrichtung erstreckenden Sicherheitsraumbereich 108 ermittelbar ist, und ein Steuermittel, mit dem das Lasersystem 102 abhängig von einem erkannten Eindringen eines Flugobjektes 109 in den Sicherheitsraumbereich und/oder einem Vorhandensein eines Flugobjektes 109 im Sicherheitsraumbereich 108 steuerbar ist, wobei vorliegend das Steuermittel derart ausgeführt und eingerichtet ist, dass ein Aussenden eines Laserstrahls 103 immer dann unterbunden wird, oder das Aussenden eines Laserstrahls 103 mit einer vorgebbar reduzierten Laser-Leistung erfolgt und/oder die Laserstrahlrichtung geändert wird, wenn ein Eindringen zumindest eines Flugobjekts 109 in den Sicherheitsraumbereich 108 und/oder ein Vorhandensein zumindest eines Flugobjektes 109 im Sicherheitsraumbereich 108 erkannt wird.

Das Forschungsflugzeug 101 mit dem Lasersystem 102 und der erfindungsgemäßen Vorrichtung 100 befindet sich vorliegend im Fluge. Die Flugrichtung ist durch den Pfeil angedeutet. Der Sicherheitsraumbereich 108 ist im Querschnitt längs des Laserstrahls 103 dargestellt. Es sei angenommen, dass der Laserstrahl 103 in unterschiedliche Richtungen vom Lasersystem 102 ausgesandt werden kann und der Sicherheitsraumbereich 108 abhängig von der Laserstrahlrichtung vorgegeben ist. Im einfachsten Fall bleiben dabei die Geometrie und die Abmessung des Sicherheitsraumbereichs 108 erhalten und der Sicherheitsraumbereich 108 wird lediglich entsprechend einer neuen Laserrichtung "geschwenkt". Natürlich ist es ebenfalls denkbar, den Sicherheitsraumbereich nicht nur abhängig von der Laserstrahlrichtung zu "schwenken", sondern auch seine Geometrie und Abmessungen abhängig von der Laserstrahlrichtung zu ändern. So kann bspw. ein senkrecht nach oben, in großer Flughöhe ausgesandter Laserstrahl einen anderen Sicherheitsraumbereich aufweisen, als ein senkrecht nach unten ausgesandter Laserstrahl.

**Fig. 2** zeigt weiterhin ein niedriger fliegendes Flugzeug 109 -die Flugrichtung dieses Flugzeugs 109 ist ebenfalls durch einen Pfeil angedeutet-, das sich in entgegengesetzter Flugrichtung auf den Sicherheitsraumbereich 108 zu bewegt, und in absehbarer Zeit in den Sicherheitsraumbereich 108 eindringen wird.

Das Mittel, mit dem vorliegend ein Eindringen und/oder ein Vorhandensein des Flugobjekts 109 in den/dem vorgegebenen, sich in die Umgebung entlang der Laserstrahlrichtung erstreckenden Sicherheitsraumbereich 108 ermittelt wird, basiert in dem vorliegenden Ausführungsbeispiel darauf Signale eines Mode-S Transponder eines Kollisionswarnsystems ACAS zu empfangen und auszuwerten.

Kollisionswamgeräte (ACAS, Airborne Collision Avoidance System) sind Flugzeugsysteme, die unabhängig von einer Ausrüstung am Boden oder der Flugverkehrskontrolle (Air Traffic Control) arbeiten und die den Piloten warnen, wenn sich fremde Luftfahrzeuge dem eigenen Flugzeug annähern und eine Kollisionsgefahr besteht. Die Implementierung eines ACAS an Bord von Flugzeugen wird auch als TCAS (Traffic Collision Avoidance System oder Traffic Alert and Collision Avoidance System) bezeichnet. In der Regel arbeiten diese Kollisionswarngeräte auf der Basis von Sekundärradarsystemen. Dabei wird der Luftraum um das eigene Flugzeug vom Mittel aktiv nach entsprechend aktiven Sendern anderer Flugzeugen abgefragt, die ihrerseits Signale über die Position des mit einem derartigen Transponder ausgestatteten Flugzeugs senden. Ein derartiger Abfrage-Sende-Zyklus kann mehrmals pro Sekunde stattfinden. Bei denen in der Zivilluftfahrt verwendeten Systemen wird in der Regel die Abfrage auf der Frequenz 1030 MHz und die Antwort auf der Frequenz 1090 MHz übertragen. Dabei wird zwischen verschiedenen Abfragemodi unterschieden (in der zivilen Luftfahrt sind dies z.B. Mode-A, Mode-C. oder Mode-S). Heutzutage müssen die meisten Luftfahrzeuge mit Mode-S Receivern ausgestattet sein. Das deutsche Luftfahrt-Bundesamt fordert beispielsweise Transponderpflicht bei allen IFR-Flügen, bei VFR-Flügen in den Lufträumen C und D (nicht Kontrollzone), bei VFR-Flügen in Lufträumen mit vorgeschriebener Transponderschaltung (Transponder Mandatory Zone TMZ), bei VFR-Flügen bei Nacht im kontrollierten Luftraum, und bei VFR-Flügen mit motorgetriebenen Luftfahrzeugen oberhalb 5000 ft über NN oder oberhalb einer Höhe von 3500 ft über Grund. Noch weitergehende Informationen zur Luftraumbeobachtung liefert das ADS-B System (Automatic Dependent Surveillance-Broadcast), das ebenfalls auf der 1090-MHz Radiofrequenz arbeitet. Die mit entsprechenden Transpondern ausgerüsteten Flugzeuge liefern Informationen über Identität, Ort, Geschwindigkeit etc. Auf diese Weise steht im eigenen Flugzeug ein umfangreicher Überblick über die momentane Verkehrssituation in der Umgebung zur Verfügung. Auch Segelflugzeuge, für die Z.Zt. keine Transponderpflicht besteht sind häufig mit dem sog. FLARM-System ausgestattet. FLARM ist eine Umsetzung von ADS-B, optimiert für die Anforderungen der Kleinluftfahrt. Die Reichweite eines TCAS-Systems beträgt üblicherweise 20-40 nautische Meilen (NM). Die Reichweite der ADS-Ausstrahlung beträgt bis zu 200 NM.

Zusammenfassend bedeutet dies, dass die überwiegende Anzahl von Luftfahrzeugen gegenwärtig bereits mit Transpondersystemen ausgestattet ist. In Zukunft wird eine noch größere Verbreitung von entsprechenden Transpondern erwartet. Statt die Transpondersignale nur hinsichtlich einer drohenden Kollision auszuwerten, kann man die übermittelten Informationen der anderen Flugzeuge auch dazu nutzen, Warnungen zu erzeugen oder sogar direkt bestimmte Sicherheitssysteme zu aktivieren, wenn andere Flugzeuge in den Sicherheitsraumbereich, um das eigene Flugzeug herum eindringen oder sich in diesem aufhalten. So ist es mit den Informationen aus einem entsprechenden ACAS- Receiver an Bord des eigenen Flugzeugs möglich, bspw. den Laserstrahl zu unterbrechen, solange die Gefahr besteht, ein fremdes LFZ mit dem Laserstrahl zu treffen. Damit wird die Sicherheit erhöht und gleichzeitig der Einsatzbereich von derartigen flugzeuggetragenen Lasersystemen vergrößert.

Nach dem vorstehenden Exkurs kommen wir nun wieder zurück zu Fig. 2. Das schematisch dargestellte Forschungsflugzeug 101 mit dem Lasersystem 102 überwacht mit dem Mittel der erfindungsgemäßen Vorrichtung 100 den umgebenden Luftraum mit Hilfe eines derartigen ACAS-Systems, d.h. eines Mode-S Receivers. Entsprechende Transpondersignale werden damit beispielsweise zwischen dem Flugzeug 109 bzw. dem Forschungsflugzeug 101 und einer Bodenstation 110 an der Erdoberfläche 115, und zwischen dem Flugzeug 109 und dem Forschungsflugzeug 101 ausgetauscht. Die entsprechenden Signalwege sind durch die jeweiligen Pfeile 111, 112, und 113 gekennzeichnet. Wenn das Flugzeug 109 in den vorgegebenen Sicherheitsraumbereich 108 eindringt oder sich darin aufhält, so ist dies durch Auswertung der Transpondersignale des Flugzeugs 109 an Bord des Forschungsflugzeugs 101 ermittelbar. Wird ein solches Eindringen oder Vorhandensein des Flugzeugs 109 im Sicherheitsraumbereich erkannt, so wird die Aussendung des Laserstrahls 103 von dem zur erfindungsgemäßen Vorrichtung gehörenden Steuermittel unterbrochen.

Der Überwachungsbereich des Receivers (Surveillance Range) 114 ist dabei grundsätzlich größer als der Sicherheitsraumbereich 108. Vorliegend ist der Überwachungsbereich 114 eine Kugelvolumen mit einer in der vorliegenden Querschnittsdarstellung gestrichelt dargestellten Oberfläche. Der Überwachungsbereich 114 ist vorliegend definiert, als der Raumbereich in dem Transpondersignale anderer Flugzeuge, bspw. des Flugzeugs 109, vom Forschungsflugzeug 101 empfangen werden können.

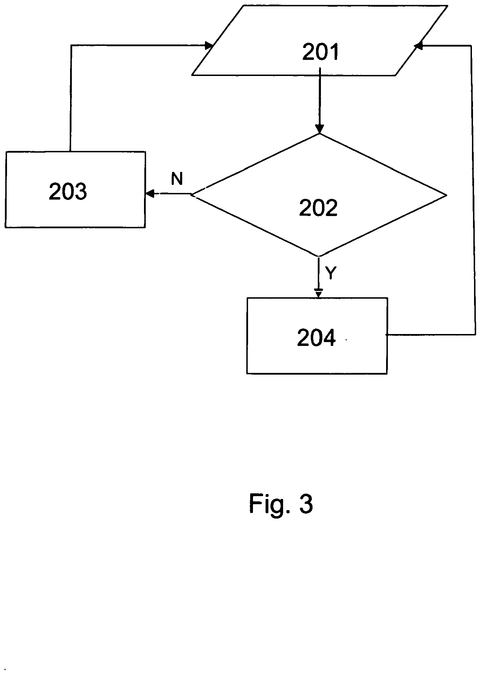

Fig. 3 zeigt das Ablaufschema eines erfindungsgemäßen Verfahrens zur Steuerung eines Lasersystems 102, mit dem zumindest ein Laserstrahl 103 in einer Laserstrahlrichtung in eine Umgebung aussendbar ist, mit folgenden Schritten: Ermitteln, ob zumindest ein Flugobjekt 109 in einen vorgebbaren, sich in die Umgebung entlang der Laserstrahlrichtung erstreckenden Sicherheitsraumbereich 108 eindringt und/oder darin vorhanden ist, und Steuern des Lasersystems 102 derart, dass bei einem ermittelten Eindringen zumindest eines Flugobjekts 109 in den Sicherheitsraumbereich 108 und/oder einem ermittelten Vorhandensein zumindest eines Flugobjekts 109 im Sicherheitsraumbereich 108, das Lasersystem 102 keinen Laserstrahl 103 aussendet, oder einen Laserstrahl 103 mit verminderter Leistung oder Energie aussendet und/oder die Laserstrahlrichtung geändert wird, so dass das erkannte Flugobjekt 109 nicht getroffen wird. Das dargestellte Ablaufschema umfasst im Schritt 201 das Empfangen und Auswerten von Transpondersignalen anderer Flugobjekte 109. Nach deren Auswertung kann die Position der erkannten Flugobjekte ermittelt werden. In Schritt 202 wird ermittelt, ob sich ein erkanntes Flugobjekt 109 innerhalb des vorgegebenen Sicherheitsraumbereiches 108 befindet. Ist dies der Fall (Y) wird in Schritt 204 das Aussenden des Laserstrahls 103 unterbunden. Wird kein Flugobjekt 109 im Sicherheitsraumbereich 108 ermittelt (N), so wird in Schritt 203 die Aussendung eines Laserstrahls 103 freigegeben.

## Patentansprüche

1. Vorrichtung (100) zur Steuerung eines Lasersystems (102), mit dem zumindest ein Laserstrahl (103) in einer Laserstrahlrichtung in eine Umgebung, insbesondere in die Erdatmosphäre und/oder den Weltraum, aussendbar ist, aufweisend:
- ein Mittel, mit dem ein Eindringen und/oder ein Vorhandensein eines Flugobjekts (109) in einem vorgebbaren, sich in die Umgebung entlang der Laserstrahlrichtung erstreckenden Sicherheitsraumbereich (108) ermittelbar ist, und
- ein Steuermittel, mit dem das Lasersystem (102) abhängig von einem erkannten Eindringen eines Flugobjektes (109) in den Sicherheitsraumbereich (108) und/oder einem Vorhandensein eines Flugobjektes (109) im Sicherheitsraumbereich (108) steuerbar ist,
**dadurch gekennzeichnet, dass** das Mittel derart ausgeführt und eingerichtet ist, dass Signale von Sekundärradartranspondern und/oder von ADS-B-Sendern und/oder von FLARM-Sendern empfangbar sind und das Eindringen eines Flugobjektes (109) in den und/oder das Vorhandensein eines Flugobjektes (109) im Sicherheitsraumbereich (108) auf Basis der empfangenen Signale ermittelt wird.

2. Vorrichtung (100) gemäß Anspruch 1,
**dadurch gekennzeichnet, dass** das Lasersystem (102) und die Vorrichtung (100) an Bord eines Fluggerätes (101) installiert sind, wobei der Laserstrahl (103) in die Umgebung des Fluggerätes (101), insbesondere in die freie Erdatmosphäre, aussendbar ist.

3. Vorrichtung (100) gemäß Anspruch 1,
**dadurch gekennzeichnet, dass** das Lasersystem (102) und die Vorrichtung (100) an der Erdoberfläche (115) mobil oder immobil positioniert sind, wobei der Laserstrahl (103) in die Umgebung, insbesondere in die freie Erdatmosphäre, aussendbar ist.

4. Vorrichtung (100) gemäß einem der Ansprüche 1 bis 3,
**dadurch gekennzeichnet, dass** die Laserstrahlrichtung des Laserstrahls (103) variabel ist, und das Mittel derart ausgeführt und eingerichtet ist, dass der Sicherheitsraumbereich (108) abhängig von der Laserstrahlrichtung in die ein Laserstrahl (103) aussendbar ist automatisiert festlegbar ist.

5. Vorrichtung (100) gemäß einem der Ansprüche 2 oder 4,
**dadurch gekennzeichnet, dass** das Mittel eine Einheit zur Erfassung der aktuellen Position des Fluggerätes (101) und eine Datenbank umfasst, in der vorgebbare Bereiche auf der Erdoberfläche (115) und/oder Lufträume definiert sind, über/in denen das Aussenden eines Laserstrahls (103) durch das Lasersystem (102) Restriktionen unterliegt, und das Steuermittel derart ausgeführt und eingerichtet ist, dass das Lasersystem (102) abhängig von der aktuellen Position, den vorgegebenen Bereichen der Erdoberfläche und/oder den vorgegebenen Lufträumen und den hierfür definierten Restriktionen automatisiert steuerbar ist.

6. Vorrichtung (100) gemäß einem der Ansprüche 1 bis 5,
**dadurch gekennzeichnet, dass** das Steuermittel derart ausgeführt und eingerichtet ist, dass ein Aussenden eines Laserstrahls (103) immer dann unterbunden wird, oder das Aussenden eines Laserstrahls (103) mit einer vorgebbar reduzierten Laser-Leistung/- Energie erfolgt und/oder die Laserstrahlrichtung geändert wird, wenn ein Eindringen zumindest eines Flugobjekts (109) in den Sicherheitsraumbereich (108) und/oder ein Vorhandensein zumindest eines Flugobjektes (109) im Sicherheitsraumbereich (108) erkannt wird.

7. Vorrichtung (100) gemäß einem der Ansprüche 2 oder 4 bis 6,
**dadurch gekennzeichnet, dass** das Steuermittel derart ausgeführt und eingerichtet ist, dass ein Aussenden eines Laserstrahls (103) immer dann unterbunden wird, oder das Aussenden eines Laserstrahls (103) mit einer vorgebbar reduzierten Laser-Leistung erfolgt, wenn das Fluggerät (101) einen vorgebbaren Bereich auf der Erdoberfläche (115) überfliegt, und/oder das Fluggerät (101) in einen vorgebbaren Luftraum einfliegt und/oder sich darin aufhält.

8. Lasersystem (102) mit einer Vorrichtung (100) gemäß einem der Ansprüche 1 bis 7.

9. Verfahren zur Steuerung eines Lasersystems (102), mit dem zumindest ein Laserstrahl (103) in einer Laserstrahlrichtung in eine Umgebung aussendbar ist, mit folgenden Schritten:
- Ermitteln, ob zumindest ein Flugobjekt (109) in einen vorgebbaren, sich in die Umgebung entlang der Laserstrahlrichtung erstreckenden Sicherheitsraumbereich (108) eindringt und/oder darin vorhanden ist, und
- Steuern des Lasersystems (102) derart, dass bei einem ermittelten Eindringen zumindest eines Flugobjekts (109) in den Sicherheitsraumbereich (108) und/oder einem ermittelten Vorhandensein zumindest eines Flugobjekts (109) im Sicherheitsraumbereich (108), das Lasersystem (103) keinen Laserstrahl (103) aussendet, oder einen Laserstrahl (103) mit verminderter Leistung aussendet und/oder die Laserstrahlrichtung geändert wird, so dass das erkannte Flugobjekt (109) nicht getroffen wird,
- wobei das Ermitteln des Eindringens und/oder des Vorhandenseins eines Flugobjektes (109) im Sicherheitsraumbereich (108) auf Basis von empfangenen Signalen von Sekundärradartranspondern und/oder von ADS-B-Sendern und/oder von FLARM-Sendern erfolgt.
